# EUROPEAN PATENT SPECIFICATION

(11) **EP 2 754 479 B1**
(45) Date of publication and mention of the grant of the patent: **19.04.2017**
(21) Application number: 12829982.3
(22) Date of filing: 30.01.2012
(51) Int. Cl.: B01D 46/10, B01D 46/52, F16J 15/10

(54) **AIR FILTER**
LUFTFILTER
FILTRE À AIR

(30) Priority: 06.09.2011 JP 2011194303
(43) Date of publication of application: 16.07.2014
(73) Proprietor: Nippon Muki Co., Ltd., Tokyo 110-0015 (JP)
(72) Inventor: HAYASHI, Shiro, Yuki-shi Ibaraki 307-0046 (JP)
(74) Representative: Körfer, Thomas
(86) International application number: PCT/JP2012/000556
(87) International publication number: WO 2013/035211

(56) References cited:
- EP-A2- 2 127 724
- JP-A- H08 187 411
- JP-A- 2000 210 513
- JP-A- 2005 238 215
- JP-A- 2006 150 219
- JP-A- 2011 083 713
- JP-U- S6 287 722
- JP-U- S6 299 317

## Description

### Technical Field

The present invention relates to an air filter used for cleaning circulating air in a dryer and so on and for processing exhaust gas in an incinerator, having a heat resistance so as to be used in a high-temperature range. The present invention also relates to an air filter used for air cleaners for semiconductors, food, hospitals and the like in room temperature or a relatively low-temperature range. In particular, the present invention relates to an air filter suitable for a sterilization furnace of medical products in which the air filter is used in the horizontal direction (landscape orientation).

### Background Art

The present applicant has proposed an air filter in which a filter pack including corrugated separators inserted into folding spaces of a filter paper folded in zigzag shape is housed in a filter frame through a sheet-shaped sealing material having a density of 20 to 120kg/m³ made of ultra-fine glass fibers having an average fiber diameter of 1µm or less arranged on a zigzag-shaped end side of the filter paper in Patent Literature 1 for the purpose of being used in the high-temperature range as well as improving work efficiency without using a silicone resin or a heat-resistant inorganic sealant.

However, in the case where the load of a filter final pressure or more is applied due to drift or turbulence at the time of using the air filter, there is a problem that the filter pack is moved to contact upper and lower folded portions of the filter frame and the filter pack is deformed and damaged to thereby cause the leakage of air.

In view of the above, the present applicant has proposed an air filter in which a sheet-shaped sealing material made of glass fibers is inserted into a zigzag-shaped end surface of a filter pack formed by folding a filter medium in zigzag shape and by inserting corrugated separators into folding spaces, and at least the zigzag-shaped end surface of the filter pack is surrounded by a filter frame having a C-shape in cross section and including folded portions formed by inwardly folding open ends, which includes a stopper between the folded portion and the filter pack.

### Citation List

### Patent Literature

Patent Literature 1: JP-A-2005-238215

### Summary of Invention

### Technical Problem

However, when the air filter is used for the sterilization furnace of medical products in which the air filter is used in the horizontal direction (landscape orientation), adhesion between the filter frame and the filter pack is reduced during use at high temperature, and there is a danger that the filter pack falls off from the filter frame due to the own weight of the filter pack.

Accordingly, an object of the present invention is to provide an air filter in which the filter pack is not moved in use as well as in which the filter pack does not fall off when used in horizontal direction.

### Solution to Problem

According to the present invention, there is proposed, as described in claim 1, an air filter in which a sheet-shaped sealing material made of glass fibers is inserted into a zigzag-shaped end surface of a filter pack formed by folding a filter medium in zigzag shape and by inserting corrugated separators into folding spaces, and at least the zigzag-shaped end surface of the filter pack is surrounded by a filter frame having a C-shape in cross section and including folded portions formed by inwardly folding open ends, which includes a stopper between the folded portion in a downstream side and the filter pack, and strip-shaped sealing materials made of glass fibers are embedded between the sheet-shaped sealing material and the filter pack so as to closely contact the separators in the folding spaces of the filter pack.

In the air filter described in claim 2, the folded portion of the filter frame may be apart from the stopper in the air filter according to claim 1.

In the air filter described in claim 3, a height of the stopper may be lower than a height of the folded portion of the filter frame in the air filter according to claim 1 or 2.

In the air filter described in claim 4, the stopper may be provided in an inner peripheral surface of the filter frame in the air filter according to any one of claims 1 to 3.

In the air filter described in claim 5, the stopper may be provided in a board separated from the filter frame, and punching holes may be provided in the board in the air filter according to any one of claims 1 to 3.

In the air filter described in claim 6, the board may be wrapped around by the sheet-shaped sealing material made of glass fibers in the air filter according to claim 5.

In the air filter described in claim 7, the sheet-shaped sealing material made of glass fibers may be formed so that glass fibers with an average fiber diameter of 1µm or less have a density of 20 to 120kg/m³ in the air filter according to any one of claims 1 to 6.

In the air filter described in claim 8, strip-shaped sealing materials made of glass fibers may be formed so that glass fibers with an average fiber diameter of 1.5µm or less have a density of 20 to 120kg/m³ in the air filter according to any one of claims 1 to 7.

### Advantageous Effects of Invention

When applying the air filter according to the present invention, the stopper is provided between the folded portion in the downstream side of the filter frame and the filter pack, therefore, it is possible to solve problems that the filter pack is moved and contacts the folded portion of the filter frame to deform and damage the filter pack when the air filter is used, as a result, air leakage occurs. In particular, a problem that the filter pack falls off can be solved by the stopper even if the air filter is horizontally placed (landscape orientation) and the filter pack moves downward by the own weight.

Moreover, in particular, when the air filter is used in the horizontal direction (landscape orientation), the strip-shaped sealing materials made of glass fibers are embedded between the sheet-shaped sealing material made of glass fibers and the filter pack so as to closely contact the separators in the folding spaces of the filter pack, therefore, even when the strength of the filter medium is reduced due to a high-temperature load of 300°C or more and crushing occurs in zigzag-shaped both end portions of the filter medium, the strip-shaped sealing materials prevents the air leakage against the crushing, thereby securing the sealing property. Even when the filter pack bends due to the own weight, and an upper end portion of the filter pack is separated from the filter frame, the airtightness with respect to the filter frame is maintained by the strip-shaped sealing materials and the sheet-shaped sealing material which are united in the lower end side of the filter pack, thereby securing the sealing property.

Furthermore, a problem of the generation of siloxane gas does not occur as a silicone resin sealant is not used as the sealing material. Additionally, the sealing material can be used in a high-temperature range with no problem.

In the case where the sealing materials made of ultra-fine glass fibers are formed to be a sheet shape or strip shapes are used as the sealing materials, they have excellent workability by laying or filling work. As the density of these sealing materials is higher than sealing materials made of glass raw cotton, the uniform sealing property can be secured over the entire filter. Furthermore, as the sheet-shaped filter material made of ultra-fine glass fibers can present the deformation of the filter pack due to expansion/contraction of the filter frame by atmospheric temperature, bypass leakage between the filter pack and the filter frame can be suitably prevented.

When glass fibers forming the sheet or strips are ultra-fine glass fibers, the specific surface area contacting the filter pack is increased and the sealing property is improved.

Additionally, when the sheet-shaped sealing material made of ultra-fine glass fibers abuts on the filter frame, the shock received by the air filter itself at the time of transportation and so on is absorbed and the filter pack is protected from the shock to maintain a good state. Furthermore, even when the separators are vertically stretched by receiving a high temperature during use, the stretch can be absorbed, therefore, it is possible to prevent the filter pack from receiving damage.

### Brief Description of Drawings

[Fig. 1] Figs. 1(a) to 1(c) are explanatory views of an air filter according to an embodiment of the present invention ((a) is a plan view, (b) is an A-A cross-sectional view and (c) is an enlarged perspective view of a relevant part in a state where a filter frame is removed).
[Fig. 2] Fig. 2 is an enlarged view of a relevant part of the A-A cross section according to the embodiment.
[Fig. 3] Figs. 3(a) to 3(c) are explanatory views of a board used in the embodiment ((a) is a side view, (b) is a plan view and (c) is a front view).
[Fig. 4] Fig. 4 is an enlarged view of a cross section of an air filter according to another embodiment of the present invention.
[Fig. 5] Fig. 5 is an explanatory view of a sealing layer according to an embodiment of the present invention.

### Description of Embodiments

Next, an air filter according to the present invention will be explained with reference to the drawings.

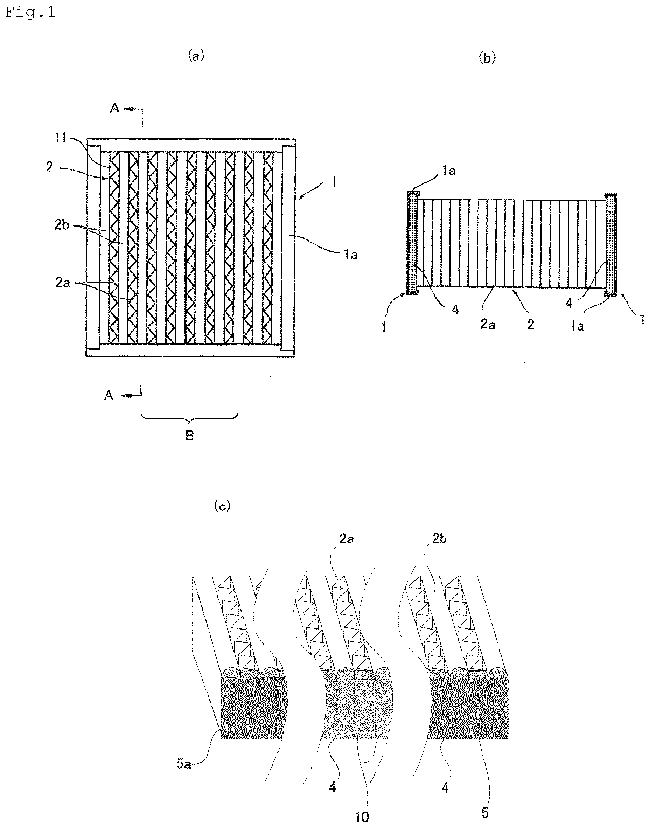

Fig. 1 shows a plan view (a) of an air filter according to the present invention, an A-A cross sectional view (b) thereof and an enlarged perspective view (c) of a relevant part in a state where a filter frame is removed.

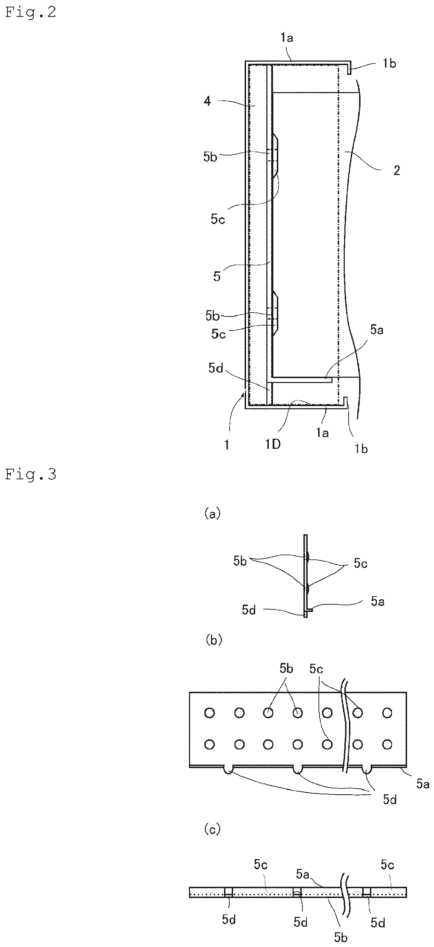

A portion denoted by 1 in the drawings shows a filter frame, and the filter frame 1 is formed by a frame plate having a C-shape in cross section, including flanges 1a on upstream and downstream sides of an air flow direction. In tip potions (open ends of the C-shape in cross section) of the flange 1a, folded portions 1b are formed by being folded toward a filter pack 2 housed in the filter frame 1 in an airtight manner as shown in an enlarged view of Fig. 2. The filter pack 2 includes a filter paper 2a made of inorganic fibers formed by connecting inorganic fibers to one another by an organic binder and corrugated separators 2b, 2b...inserted into folding spaces 11 formed in the filter paper 2a by being folded in zigzag shape.

Then, the filter pack 2 is housed in the filter frame 1 by providing sealing layer 4 at least in a zigzag-shaped end portion of the filter pack 2 for sealing between the filter pack 2 and the filter frame 1 on the outer periphery thereof.

In addition to the sealing layer 4, strip-shaped sealing materials 10 made of ultra-fine glass fibers are embedded between the sealing layer 4 and the filter pack 2 so as to closely contact the separators 2b of the folding spaces 11 of the filter pack 2.

As shown in Fig. 2 as the enlarged view of a relevant part of Fig. 1 (b), a board 5 made of an aluminum alloy, aluminum or stainless steel is arranged in an inner surface of a side portion of the filter frame 1, and a stopper 5a for preventing the movement of the filter pack 2 toward the downstream side is provided on the downstream side of the board 5. The shape of the stopper 5a is not particularly limited as long as the stopper 5a can prevent the movement of the filter pack 2, and the stopper 5 can be formed by welding or depositing a plate-shaped body (to be the stopper 5a) or bending the board 5 so that the stopper 5a is in parallel to the flange 1a of the filter frame 1.

The stopper 5a is provided in at least a pair of facing edges of the filter frame 1. Accordingly, it is possible to prevent the movement of the filter pack 2 toward the downstream side by sandwiching the filter pack 2.

The stopper 5a may be provided so as to contact an inner wall surface 1D in the downstream side of the filter frame 1 (an end surface in the downstream side of the filter frame 1), and the stopper 5a is preferably provided with a given gap between the inner wall surface 1D and the filter pack 2 side. This is because the gap will be a play with respect to slight movement of the filter pack 2 to thereby cushion the shock generated when the filter pack 2 contacts the stopper 5a.

It is also preferable that the folded portion 1b of the filter frame 1 is 2mm or more apart from the stopper 5a. That is because, even when the filter pack 2 moves in the downstream side due to pressure or the own weight, the filter pack 2 stops by the stopper 5a to thereby positively prevent the contact with the folded portion 1b and the occurrence of damage in the filter pack 2.

The height of the stopper 5a is preferably set to be lower than the height of the flange 1a in the downstream side of the filter frame 1. That is because, when the stopper 5a is higher than the flange 1a, the stopper 5a protrudes from the sealing layer 4 to disfigure the appearance, and the ventilation area of the filter pack 2 is reduced in the extreme case.

The detailed shape of the board 5 shown in Fig. 2 will be explained with reference to Fig. 3. In the board 5, punching holes 5b are provided at given intervals in matrix. The movement of the filter pack 2 can be further prevented by burrs 5c formed at the time of forming the punching holes 5b.

Part of an end portion of the downstream side in the board 5 is folded to form the stopper 5a and the remaining portions (projecting pieces) 5d separate the inner wall surface 1D from the stopper 5a, thereby supporting the load applied to the stopper 5a by the flange 1a of the filter frame 1.

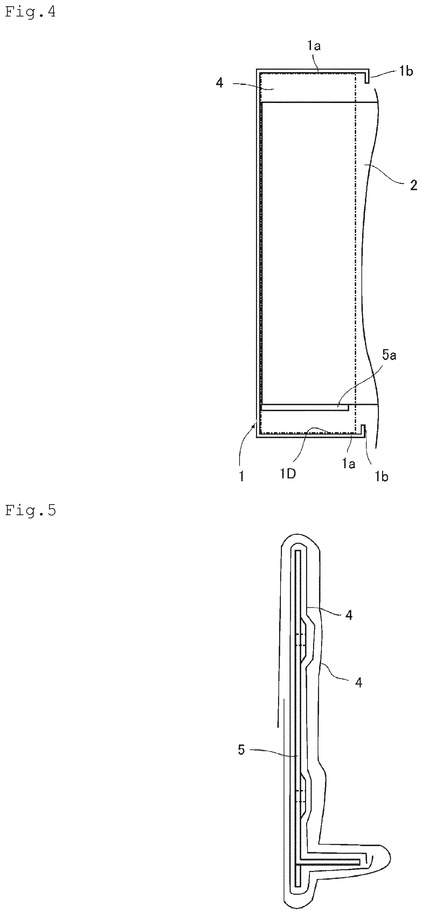

The structure in which the stopper 5a is provided in the board 5 has been explained in the examples shown in Fig. 2 and Fig. 3, and it is also preferable that the stopper 5a is directly provided in an inner peripheral surface of the filter frame 1 as shown in Fig. 4. Though one filter frame 1 as the C-shaped member is provided in the example shown in Fig. 2, it is possible to apply a composite structure in which a C-shaped member folded outward and a stay folded inward to be a C-shape are welded together.

As the filter pack to be used in the present invention, the one formed in a rectangular parallelepiped shape by a filter medium can be used. As the filter medium, a filter medium for HEPA or ULPA made of glass fiber paper and the like formed by a papermaking method in which fine glass fibers are connected by an organic binder can be used. The medium is folded in zigzag shape and separators made of aluminum, stainless steel metal foil and the like are inserted for maintaining gaps in the filter medium to thereby form the filter pack.

As the sheet-shaped sealing material 4 made of ultra-fine glass fibers, the one made of inorganic fibers having a thickness of 0.5 to 1mm, a weight of 20 to 30g/m² and a density of 20 to 120kg/m³ can be used, and for example, the one in which ultra-fine glass fibers having an average fiber diameter of 1µm or less are formed by being spun and collected to be a sheet shape without using a binder can be used. Plural pieces of the sheet-shaped sealing materials 4 can be stacked to have a weight of 80 to 120g/m². When the density of the sheet-shaped sealing materials 4 made of ultra-fine glass fibers exceeds 120kg/m³, there are problems that the absorbability for elongation of a metal to be used for the filter frame 1, the separators 2b and so on is reduced, and further, the load per a unit area of the filter pack 2 is increased to deform the filter pack 2. When the density is less than 20kg/m³, there is a problem that leakage occurs as a pressing force of the filter pack 2 is small. When the average fiber diameter exceeds 1µm, the sealing property is insufficient as the fibers do not fit with projections and depressions at zigzag shaped end portions in the filter pack 2.

The sheet-shaped sealing material 4 is represented as the sealing layer 4 surrounded by dotted lines in Fig. 2 and Fig. 4, however, a method of providing the sheet-shaped sealing material 4 is not particularly limited as long as it is inserted between the filter pack 2 and the filter frame 1.

For example, when the board 5 explained in Fig. 2 is sealed, it is preferable that the board 5 is wrapped around by the sheet-shaped sealing material 4 as shown in Fig. 5. This is because a portion between the board 5 and a bottom face of the filter frame 1, and a portion between the board 5 and the filter pack 2 can be positively sealed. In the shown example, two pieces of sheet-shaped materials 4 are used by being overlapped on the board 5. End portions of respective sealing materials 4 are folded to each other so that the surface of the board 5 does not project.

As the strip-shaped sealing materials 10 made of ultra-fine glass fibers, the one made of inorganic fibers having a weight of 20 to 30g/m² and a density of 20 to 120kg/m³ can be used, for example, a cotton-like material formed by spinning and collecting ultra-fine glass fibers having an average fiber diameter of 1.5µm or less without using a binder can be used. When the density of the strip-shaped sealing materials 10 made of ultra-fine glass fibers exceeds 120kg/m³, there are problems that the absorbability for elongation of a metal to be used for the filter frame 1, the separators 2b and so on is reduced, and further, the load per a unit area of the filter pack 2 is increased to cause the fall-off of the filter pack 2. When the density is less than 20kg/m³, there are problems that a force of adhering the filter frame 1 to the filter pack 2 also by using the seat-shaped sealing material 4 made of ultra-fine glass fibers is reduced and that a force of supporting the filter medium at the time of applying a high-temperature load is reduced to lower the sealing property. When the average fiber diameter exceeds 1.5µm, the sealing property with respect to submicron particles is reduced as the adhesion with respect to the sheet-shaped sealing material 4 made of ultra-fine glass fibers is reduced.

As the filter frame 1, metals such as aluminum, stainless steel and a copper plate are preferably used, though not particularly limited.

### Example

Next, a specific example of the present invention will be explained in comparison with Comparative Examples 1, 2.

An air filter including the board 5 with the stopper 5a around which the sheet-shaped sealing material 4 was wound was fabricated as an example, and an air filter not including the board 5 with the stopper 5a around with the sheet-shaped sealing material 4 was wound was fabricated in Comparative Example 1, and an air filter not including strip-shaped sealing materials made of glass fibers was fabricated in Comparative Example 2, and respective air filters were compared with one another.

The board 5 (141mm×568mm×0.8mm, 0.6kg) made of stainless steel in which 7-rows and 2-columns of holes 5b having a diameter of 6 to 8mm (row-direction pitch 30mm and column-direction pitch 50mm) were provided for allowing the burrs 5c to protrude approximately 1mm in height in the direction of the filter pack 2 was used in Example and Comparative Examples 1, 2, which was installed inside the filter frame 1 after processing to be explained below was performed.

### (Example)

As shown in Fig. 2, a stopper 5a having a height of 7mm was formed by folding a portion of the downstream side of the board 5 of the air filter at a right angle. Then, three approximately-semispherical projecting pieces 5d each extending in the downstream side 7.2mm from the position of the stopper 5a were provided at given intervals in the longitudinal direction of the board 5 so as to abut on an inner surface of the downstream side of the filter frame 1 to thereby perform positioning. Specifically, in the two projecting pieces 5d on both ends, a distance from the center line of each projecting piece 5d to an end of the board was respectively set to 34mm, and a distance between center lines of respective projecting pieces 5d was set to 250mm.

Next, the filter medium 2a made of glass fibers was folded in zigzag shape, and the corrugated separators 2b made of an aluminum alloy were inserted among the filter medium 2a folded so that ridge lines thereof were in parallel to a ventilation direction for maintaining gaps in the folding spaces to thereby form the filter pack 2 having a rectangular parallelepiped shape (580mm×580mm×125mm).

Next, glass fibers having an average fiber diameter of 1.2µm were formed in strip shapes to have a weight of 25g/m² and a density of 56kg/m³ to thereby form the sealing materials 10. The strip-shaped sealing materials 10 were embedded in folding spaces of the filter pack 2 so as to closely contact separators as shown in Fig. 1(c).

Then, glass fibers an having average fiber diameter of 0.6µm were formed in a sheet shape to have a weight of 28g/m², a density of 56kg/m³ and a thickness 2mm to thereby form the sheet-shaped sealing material 4. Two pieces of the sheet-shaped sealing materials 4 were wound twice around the front and the back of the board 5 as shown in Fig. 5, as a result, the sheet-shaped sealing material 4 having a weight of 112g/m² was obtained.

Subsequently, the boards 5 around which the sheet-shaped sealing materials 4 were wound were placed on upper and lower end surfaces (surfaces on which end surfaces of the filter medium appear in zigzag shape) of the filter pack 2 to form an air filter (610mm×610mm×150mm) by surrounding the filter pack 2 by the filter frame 1 (made of SUS 430, a board thickness 1mm) having a C-shape in cross section. The open ends of the flange 1a having a height of 14mm inside the filter frame 1 have the folded portions 1b folded inward for a length of 4mm at a right angle.

Note that the total weight of the strip-shaped sealing materials 10 used for the present air filter was set to 4g. Note that the total weight of the sheet-shaped sealing material 4 used for the air filter was set to 40g.

### (Comparative Example 1)

An air filter was formed in the same manner as the above example except that the board 5 with the stopper 5a around which the sheet-shaped sealing materials 4 were wound used in the example was removed.

### (Comparative Example 2)

An air filter was formed in the same manner as the above example except that the strip-shaped sealing materials used in the above example were removed.

Next, destruction test was performed by setting air filters in respective examples in a test duct (pressure deformation resistance test equipment (for JIS Z 4812 test)), blowing air from an air blower (NKG CORPORATION, PTB-30 No. 6 described, air flow rate: 330CMM, the number of revolutions: 2100rpm, static pressure: 650mmAq, electric motor: 45kW) and increasing the pressure by 250Pa in every five minutes from 500Pa by increasing the ventilation rate under a condition of room temperature.

Moreover, a heat-cycle load test was performed for five hours. As a condition of increasing temperature, the temperature was linearly increased to 250°C from 0 to one hour and forty-five minutes, then, the temperature was maintained for five hours after reaching 250°C, and then, the temperature was reduced to room temperature by natural standing.

As the result of the destruction test, the filter paper was broken and the curvature of the filter pack was increased at 2000Pa and the filter pack jumped out and damaged at 3250Pa in the comparative example 1. In Comparative Example 2, the filter pack did not jump out, however, the sealing property was reduced after the heat-cycle load test, and a prescribed collecting performance of the HEPA performance 99. 97% or more (at 0.3µm) was not obtained.

On the other hand, in Example, the filter paper was not broken and the filter pack is not deformed even when the pressure was increased to 4000Pa. Moreover, as the result of the heat-cycle load test for five hours, the prescribed collecting performance of the HEPA performance 99. 97% or more (at 0.3µm) was obtained.

### Reference Signs List

1 filter frame
1a flange
1b folded portion
2 filter pack
2a filter paper
2b separator
4 sheet-shaped sealing material made of ultra-fine glass fibers (sealing layer)
5 board
5a stopper
5b punching hole
5c burr
10 strip-shaped sealing material made of ultra-fine glass fibers
11 folding space

## Claims

1. An air filter in which a sheet-shaped sealing material (4) made of glass fibers is inserted into a zigzag-shaped end surface of a filter pack (2) formed by folding a filter medium in zigzag shape and by inserting corrugated separators (2b) into folding spaces (11), and at least the zigzag-shaped end surface of the filter pack (2) is surrounded by a filter frame (1) having a C-shape in cross section and including folded portions (1b) formed by inwardly folding open ends, comprising:
a stopper (5a) between the folded portion (1b) in a downstream side and the filter pack (2), and strip-shaped sealing materials (10) made of glass fibers are embedded between the sheet-shaped sealing material (4) and the filter pack (2) so as to closely contact the separators (2b) in the folding spaces (11) of the filter pack (2).

2. The air filter according to claim 1,
wherein the folded portion of the filter frame is apart from the stopper.

3. The air filter according to claim 1 or 2,
wherein a height of the stopper is lower than a height of the folded portion of the filter frame.

4. The air filter according to any one of claims 1 to 3,
wherein the stopper is provided in an inner peripheral surface of the filter frame.

5. The air filter according to any one of claims 1 to 3,
wherein the stopper is provided in a board (5) separated from the filter frame, and
punching holes (5b) are provided in the board.

6. The air filter according to claim 5,
wherein the board is wrapped around by the sheet-shaped sealing material made of glass fibers.

7. The air filter according to any one of claims 1 to 6,
wherein the sheet-shaped sealing material made of glass fibers is formed so that glass fibers with an average fiber diameter of 1µm or less have a density of 20 to 120kg/m³.

8. The air filter according to any one of claims 1 to 7,
wherein strip-shaped sealing materials made of glass fibers are formed so that glass fibers with an average fiber diameter of 1.5µm or less have a density of 20 to 120kg/m³.

## Patentansprüche

1. Luftfilter, bei dem ein aus Glasfasern bestehendes blattförmiges Dichtungsmaterial (4) in eine zickzackförmige Endfläche einer Filterpackung (2) eingesetzt ist, die durch Falten eines Filtermediums in Zickzackform und durch Einsetzen von gerippten Abscheidern (2b) in Faltungsräume (11) gebildet ist, und bei dem zumindest die zickzackförmige Endfläche der Filterpackung (2) von einem Filterrahmen (1) umgeben ist, der im Querschnitt eine C-Form aufweist und gefaltete Teile (1b) enthält, die durch nach innen erfolgendes Falten von offenen Enden gebildet sind, umfassend:
einen Anschlag (5a) zwischen dem gefalteten Teil (1b) auf einer Ausströmungsseite und der Filterpackung (2)
und aus Glasfasern bestehende streifenförmige Dichtungsmaterialien (10), die zwischen dem blattförmigen Dichtungsmaterial (4) und der Filterpackung (2) eingebettet sind, derart, um die Abscheider (2b) in den Faltungsräumen (11) der Filterpackung (2) dicht zu berühren.

2. Luftfilter nach Anspruch 1, wobei der gefaltete Teil des Filterrahmens von dem Anschlag entfernt ist.

3. Luftfilter nach Anspruch 1 oder 2, wobei eine Höhe des Anschlags niedriger ist als eine Höhe des gefalteten Teiles des Filterrahmens.

4. Luftfilter nach einem der Ansprüche 1 bis 3, wobei der Anschlag in einer Innenumfangsfläche des Filterrahmens vorgesehen ist.

5. Luftfilter nach einem der Ansprüche 1 bis 3, wobei der Anschlag in einer Platte (5) vorgesehen ist, die von dem Filterrahmen getrennt ist, und wobei in der Platte Stanzlöcher (5b) vorgesehen sind.

6. Luftfilter nach Anspruch 5, wobei die Platte von dem aus Glasfasern bestehenden blattförmigen Dichtungsmaterial umwickelt ist.

7. Luftfilter nach einem der Ansprüche 1 bis 6, wobei das aus Glasfasern bestehende blattförmige Dichtungsmaterial derart gebildet ist, dass Glasfasern mit einem mittleren Faserdurchmesser von 1µm oder weniger eine Dichte von 20 bis 120 kg/m³ aufweisen.

8. Luftfilter nach einem der Ansprüche 1 bis 7, wobei die aus Glasfasern bestehenden streifenförmigen Dichtungsmaterialien derart gebildet sind, dass Glasfasern mit einem mittleren Faserdurchmesser von 1,5µm oder weniger eine Dichte von 20 bis 120 kg/m³ aufweisen.

## Revendications

1. Filtre à air dans lequel un matériau d'étanchéité en forme de feuille (4) constitué de fibres de verre est inséré dans une surface d'extrémité en forme de zigzag d'un pack de filtre (2) formé en pliant un milieu de filtre en forme de zigzag et en insérant des séparateurs ondulés (2b) dans des espaces de pliage (11), et au moins la surface d'extrémité en forme de zigzag du pack de filtre (2) est entourée par un cadre de filtre (1) ayant une forme de C en section transversale et comprenant des portions pliées (1b) formées en pliant vers l'intérieur des extrémités ouvertes, comprenant :
un obturateur (5a) entre la portion pliée (b) dans un côté aval et le pack de filtre (2), et des matériaux d'étanchéité en forme de bande (10) constitués de fibres de verre sont enterrés entre le matériau d'étanchéité en forme de feuille (4) et le pack de filtre (2) afin d'être en contact proche avec les séparateurs (2b) dans les espaces de pliage (11) du pack de filtre (2).

2. Filtre à air selon la revendication 1, dans lequel la portion pliée du cadre de filtre est séparée de l'obturateur.

3. Filtre à air selon la revendication 1 ou 2, dans lequel une hauteur de l'obturateur est inférieure à une hauteur de la portion pliée du cadre de filtre.

4. Filtre à air selon l'une quelconque des revendications 1 à 3, dans lequel l'obturateur est fourni dans une surface périphérique interne du cadre de filtre.

5. Filtre à air selon l'une quelconque des revendications 1 à 3, dans lequel l'obturateur est fourni dans un panneau (5) séparé du cadre de filtre, et des trous de poinçonnage (5b) sont fournis dans le panneau.

6. Filtre à air selon la revendication 5, dans lequel le panneau est enveloppé par le matériau d'étanchéité en forme de feuille constitué de fibres de verre.

7. Filtre à air selon l'une quelconque des revendications 1 à 6, dans lequel le matériau d'étanchéité en forme de feuille constitué de fibres de verre est formé de sorte que des fibres de verre avec un diamètre moyen de fibres de 1 µm ou inférieur présentent une densité de 20 à 120 kg/m³.

8. Filtre à air selon l'une quelconque des revendications 1 à 7, dans lequel des matériaux d'étanchéité en forme de bandes constitués de fibres de verre sont formés de sorte que des fibres de verre avec un diamètre moyen de 1,5 µm ou inférieur présentent une densité de 20 à 120 kg/m³.
